(19) Europäisches Patentamt
European Patent Office
Office européen des brevets

(11) **EP 2 095 611 B1**

(12) **EUROPÄISCHE PATENTSCHRIFT**

(45) Veröffentlichungstag und Bekanntmachung des Hinweises auf die Patenterteilung:
**31.12.2014 Patentblatt 2015/01**

(21) Anmeldenummer: **07821361.8**

(22) Anmeldetag: **16.10.2007**

(51) Int Cl.:
***H04L 29/08*** (2006.01)

(86) Internationale Anmeldenummer:
**PCT/EP2007/060994**

(87) Internationale Veröffentlichungsnummer:
**WO 2008/058823 (22.05.2008 Gazette 2008/21)**

(54) **VERFAHREN ZUR LASTVERTEILUNG BEI EINEM PEER-TO-PEER-OVERLAY-NETZWERK**

METHOD FOR THE LOAD DISTRIBUTION IN A PEER-TO-PEER-OVERLAY NETWORK

PROCÉDÉ DE RÉPARTITION DE CHARGE DANS UN RÉSEAU DÉDIÉ AU POSTE À POSTE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **14.11.2006 DE 102006053643**

(43) Veröffentlichungstag der Anmeldung:
**02.09.2009 Patentblatt 2009/36**

(73) Patentinhaber: **Siemens Aktiengesellschaft 80333 München (DE)**

(72) Erfinder:
• **GERDES, Christoph**
  **81667 München (DE)**
• **RUSITSCHKA, Steffen**
  **81543 München (DE)**
• **SOUTHALL, Alan**
  **69190 Walldorf (DE)**

(56) Entgegenhaltungen:
**US-A1- 2004 064 556**

• **ZHENYU LI ET AL: "A Distributed Load Balancing Algorithm for Structured P2P Systems" COMPUTERS AND COMMUNICATIONS, 2006. ISCC '06. PROCEEDINGS. 11TH IEEE SYMPOSIUM ON CAGLIARI, ITALY 26-29 JUNE 2006, PISCATAWAY, NJ, USA,IEEE, 26. Juni 2006 (2006-06-26), Seiten 417-422, XP010939165 ISBN: 0-7695-2588-1**
• **GODFREY B ET AL: "Load balancing in dynamic structured p2p systems" INFOCOM 2004. TWENTY-THIRD ANNUAL JOINT CONFERENCE OF THE IEEE COMPUTER AND COMMUNICATIONS SOCIETIES HONG KONG, PR CHINA 7-11 MARCH 2004, PISCATAWAY, NJ, USA,IEEE, Bd. 4, 7. März 2004 (2004-03-07), Seiten 2253-2262, XP010740594 ISBN: 0-7803-8355-9**
• **STOICA I ET AL: "MIT-LCS-TR-819 - Chord: A Scalable Peer-to-peer Lookup Service for Internet Applications" INTERNET CITATION, [Online] 23. März 2001 (2001-03-23), XP002328538 Gefunden im Internet: URL:http://www.lcs.mit.edu/publications/pu bs/ps/MIT-LCS-TR-819.ps> [gefunden am 2005-05-17]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur gleichmäßigen Lastverteilung bei einem Peer-to-Peer-Overlay-Netzwerk, das mehrere Peers aufweist. Bei einem Peer-to-Peer-Netzwerk sind alle Peers bzw. Knoten des Netzwerks gleichberechtigt und können sowohl Dienste in Anspruch nehmen als auch Dienste zur Verfügung stellen. Bei einem Peer-to-Peer-Netzwerk ist keine zentrale Datenbank vorgesehen, sondern jeder Peer des Peer-to-Peer-Netzwerkes stellt einen Teil der vorhandenen Daten zur Verfügung, d. h. kein Peer des Peer-to-Peer-Netzwerkes verwaltet den gesamten Datenbestand. Darüber hinaus ist bei einem Peer-to-Peer-Netzwerk keine zentrale Instanz bzw. zentraler Knoten vorgegehen, der Datentransferoperationen bzw. Interaktionen steuert oder koordiniert. Jeder Peers des Peer-to-Peer-Netzwerkes arbeitet für sich autonom. Darüber hinaus hat kein Peer des Peer-to-Peer-Netzwerkes einen Überblick über die Struktur des gesamten Peer-to-Peer-Netzwerkes. Jeder Peer kennt nur diejenigen Peers, mit denen er unmittelbar interagiert.

Peer-to-Peer-Systeme haben sich als effiziente und skalierbare Technologie zum Speichern und Auffinden von Daten bewährt. Das Gegenteil des Peer-to-Peer-Prinzips stellt das Client-Server-Prinzip dar. Netzwerke werden allgemein in Peer-to-Peer-Netzwerke mit einer symmetrischen Datenkommunikation und Client-Server-Netzwerken mit einer asymmetrischen Datenkommunikation untergliedert. Bei Client-Server-Netzwerken gibt es einen Server, der einen Dienst anbietet und einen Client, der diesen Dienst nutzt. Im Gegensatz dazu, ist bei Peer-to-Peer-Netzwerken diese Rollenverteilung aufgehoben. Jeder Host in einem Computernetz stellt einen gleichberechtigten Peer dar und kann gleichzeitig Client- und Serverfunktionen übernehmen. Bei Peer-to-Peer-Netzwerken kann zwischen unstrukturierten Peer-to-Peer-Netzwerken und strukturierten Peer-to-Peer-Netzwerken unterschieden werden, die eine vorgegebene Topologie aufweisen. Insbesondere bei strukturierten Peer-to-Peer-Systemen sind beispielsweise verteilte Hash-Tabellen DHT vorgesehen und werden von den auf dem Peer-to-Peer-Netzwerk laufenden Applikationen verwendet. Eines der bekanntesten herkömmlichen DHT-Verfahren stellt Chord dar. Da bei einem Peer-to-Peer-Netzwerk die Datenressourcen auf die verschiedenen Peers verteilt werden, ist es notwendig, denjenigen Knoten bzw. Peer zu lokalisieren, der eine bestimmte Datenressource speichert. Bei Chord handelt es sich um einen Peer-to-Peer-Algorithmus zum Auffinden einer Datenressource innerhalb eines Peer-to-Peer-Netzwerkes. Dazu wird das physikalische Peer-to-Peer-Netzwerk auf ein Peer-to-Peer-Overlay-Netzwerk abgebildet. Bei Chord werden die Knoten bzw. Peers in eine Ringstruktur abgebildet, wobei jedem Peer innerhalb der Ringstruktur ein bestimmter Schlüsselwortbereich zugewiesen wird. Der herkömmliche Suchalgorithmus zum Auffinden einer Datenressource innerhalb des Peer-to-Peer-Netzwerkes geht dabei von einer Gleichverteilung der Schlüsselwörter aus. Bei einem aus m Peers bestehenden Ring und n zu speichernden Datenressourcen werden n : m Datenressourcen pro Peer abgelegt.

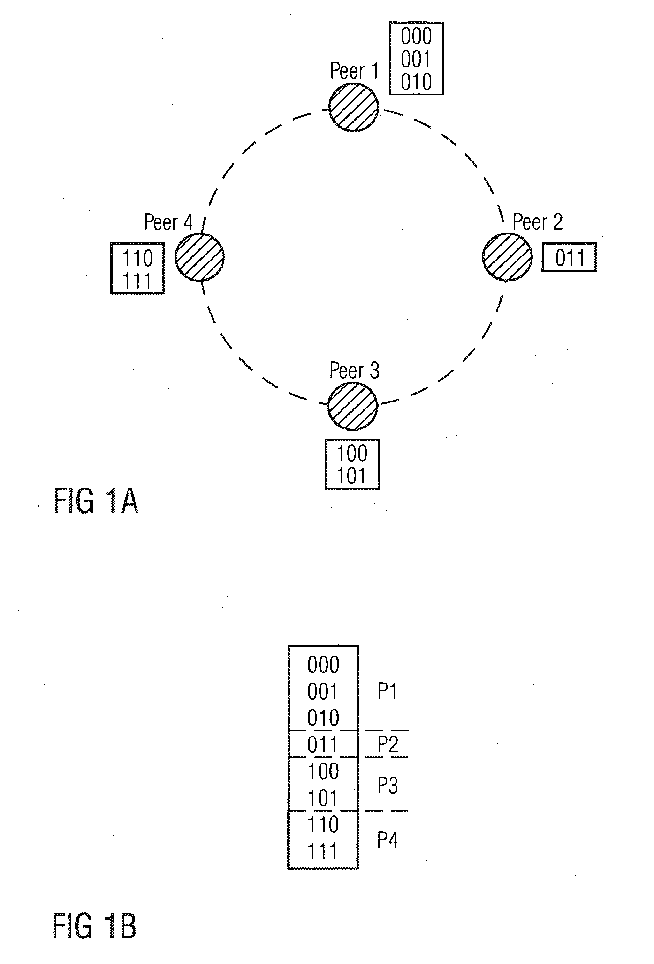

Die Figuren 1a, 1b zeigen ein einfaches Beispiel für eine Chord-Ringstruktur für ein Peer-to-Peer-Netzwerk nach dem Stand der Technik. Jeder Peer weist eine zugehörige Peer-ID auf, beispielsweise Peer-ID = 1, Peer-ID = 2, Peer-ID = 3, Peer-ID = 4. Liegt ein Peer innerhalb des Chord-Ringes, wird ihm ein bestimmter Schlüsselwortbereich zugewiesen. Bei dem in Figur 1a dargestellten einfachen Beispiel umfasst jedes Schlüsselwort lediglich drei Bits.

Figur 1b zeigt die Aufteilung des Schlüsselwortbereichs auf die vier Peers des Peer-to-Peer-Netzwerkes. Dem ersten Peer P1 sind drei Schlüsselworte, nämlich "000", "001", "010" zugewiesen. Dem zweiten Peer P2 ist lediglich ein Schlüsselwort "011" zugewiesen. Dem dritten Peer P3 sind zwei Schlüsselworte "100", "101" zugewiesen und der vierte Peer P4 weist wiederum zwei Schlüsselworte "110" und "111" auf. Bei realen Anwendungen umfassen die Schlüsselworte mehr als drei Bit, beispielsweise eine 128-Bit-Zeichenkette. Bei diesen Schlüsselworten handelt es sich vorzugsweise um Hash-Werte, die mittels einer Hash-Funktion aus einem Datensatznamen oder einem Datensatz bzw. einer Datenressource selbst gebildet werden. Bei der Datenressource kann es sich um einen beliebigen Datensatz bzw. Daten handeln, beispielsweise um ein aus vielen Bits bestehendes optisches Bild. Aus dieser Datenressource wird mittels einer Hash-Funktion ein Hash-Wert H abgeleitet. Der Hash-Wert H wird von einem Schlüsselwort bzw. dem Schlüssel abgeleitet, welcher der Datenressource zugewiesen wurde. Die Datenressource wird bei demjenigen Peer des Peer-to-Peer-Netzwerkes abgelegt, in dessen zugehöriger Schlüsselwortbereich den Hash-Wert H bzw. das Schlüsselwort der Datenressource fällt.

Lautet der Hash-Wert H bzw. das Schlüsselwort einer Datenressource beispielsweise "010", wird die Datenressource bei dem Peer P1 abgelegt. Eine Datenressource, deren Schlüsselwort beispielsweise "101" ist, wird beim Peer P3 innerhalb des Chord-Rings abgelegt.

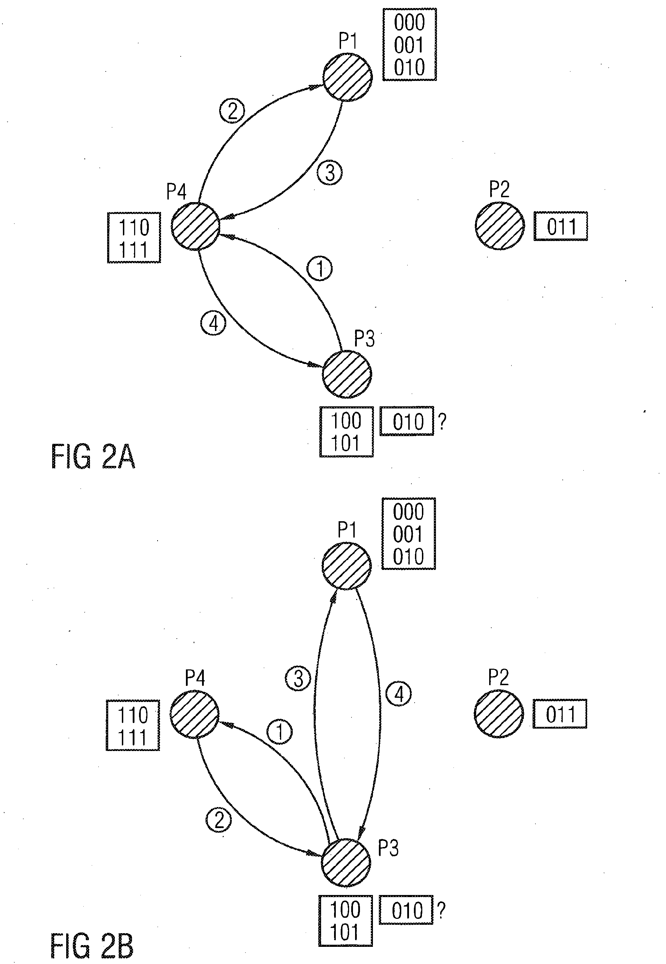

Figuren 2a, 2b zeigen anhand des in Figur 1 dargestellten einfachen Beispiels zu einem Chord-Ring das Publizieren bzw. Abspeichern einer Datenressource innerhalb des Peer-to-Peer-Netzwerkes. Möchte beispielsweise ein suchender Peer P3 eine Datenressource mit dem .Schlüsselwort "010" abspeichern, fragt es bei der in Figur 2a dargestellten Vorgehensweise zunächst einen benachbarten Peer P4, ob das Schlüsselwort in seinen Schlüsselwortbereich fällt. Ist dies wie bei dem in Figur 2a dargestellten Beispiel nicht der Fall, fragt dieser Peer P4 seinerseits seinen Nachbar-Peer P1. Da das Schlüsselwort in den Schlüsselwortbereich des Peers P1 fällt, teilt dies der Peer P1 dem Vorgänger Peer P4 mit, der seinerseits dies dem anfragenden Peer P3 mitteilt. Anschließend speichert der Peer P3 die Datenressource zu dem Schlüsselwort "010" bei dem Peer P1 ab.

Bei der in Figur 2b dargestellten alternativen Vorgehensweise fragt der anfragende Peer P3 zunächst den benachbarten Peer P4 und erhält von diesem einen Verweis auf den benachbarten Peer P1. Der Peer P3 stellt anschließend bei dem Peer P1 fest, ob das Schlüsselwort der abzuspeichernden Datenressourcen in dessen Schlüsselwortbereich fällt oder nicht. Ist dies der Fall, wie in dem angegebenen Beispiel, teilt dies der Peer P1 dem Peer P3 mit und anschließend erfolgt die Abspeicherung der Datenressource durch den Peer P3 bei dem aufgefundenen Peer P1.

Ein Nachteil herkömmlicher Peer-to-Peer-Netzwerke und des herkömmlichen Verfahren zum Speichern und Auslesen von Datenressourcen besteht darin, dass die Häufigkeit der Schlüsselwörter nicht gleich verteilt ist, sondern in der Regel einige wenige Schlüsselwörter viel häufiger auftreten als andere Schlüsselwörter. Beispielsweise wird bei einer Telefonbuchanwendung das Schlüsselwort "Maier" im deutschen Sprachraum viel häufiger auftreten als ein relativ seltener Name wie beispielsweise "Gerdes". Ein Nutzer, der eine Datenressource abspeichern möchte, vergibt meist einen Namen bzw. ein Schlüsselwort, um diese Datenressource später wieder auffinden zu können. Handelt es sich bei der Datenressource beispielsweise um ein Bild bzw. Foto, vergibt der User einen dazu passenden Namen. Wird auf dem Bild beispielsweise eine Landschaft abgebildet, kann ein User beispielsweise als Schlüsselwort bzw. als Metadaten der Datenressource das Schlüsselwort "Landschaft" zuweisen. In dieser Weise erhalten ähnliche Motive oft das gleiche Schlüsselwort. Bei den meisten Anwendungen zum Abspeichern von Datenressourcen besteht keine Gleichverteilung von Schlüsselwörtern, sondern vielmehr eine sogenannte Zipf-Verteilung, d. h. einige wenige Schlüsselwörter sind sehr häufig, während der Großteil der übrigen Schlüsselwörter eher selten auftritt.

Bei einem herkömmlichen Peer-to-Peer-Netzwerk führt dies zu einer Überlastung einzelner Peers und somit zu einer Destabilisierung des gesamten Peer-to-Peer-Netzwerkes. Peers, in deren zugewiesenem Schlüsselwortbereich häufig auftretende Schlüsselwörter enthalten sind, müssen erheblich mehr Datenressourcen abspeichern als andere Peers, in deren zugewiesenem Schlüsselwortbereich nur selten auftretende Schlüsselwörter liegen. Dementsprechend ist die Speicherkapazität dieser Peers schnell ausgeschöpft.

Das Dokument D1 (US 2004/064556) beschreibt ein Verfahren zum Speichern eines Datenobjekts in einem Peer-to-Peer-Netzwerk.

Es ist daher die Aufgabe der vorliegenden Erfindung, ein Verfahren zur gleichmäßigen Lastverteilung bei einem strukturierten Peer-to-Peer-Netzwerk zu schaffen.

Die Erfindung schafft ein Verfahren zur gleichmäßigen Lastverteilung bei einem aus mehreren Peers bestehenden Peer-to-Peer-Overlay-Netzwerk, das jeweils einen zugehörigen Schlüsselwortbereich aufweist, wobei eine zu speichernde Datenressource deren Schlüsselwort in dem Schlüsselwortbereich eines Peers liegt, bei diesem Peer nur dann abgespeichert wird, wenn die Anzahl der dort gespeicherten Datenressourcen einen Ressourcengrenzwert noch nicht erricht hat, wobei der Ressourcengrenzwert eines Peers jeweils separat individuell eingestellt wird.

Bei einer Ausführungsform des erfindungsgemäßen Verfahrens verweist ein Peer, der seinen Ressourcengrenzwert erreicht hat, auf einen in dem Peer-to-Peer-Overlay-Netzwerk benachbart liegenden Peer.

Bei einer Ausführungsform des erfindungsgemäßen Verfahrens wird das Schlüsselwort durch einen Hash-Wert gebildet.

Bei einer Ausführungsform des erfindungsgemäßen Verfahrens ist der benachbart liegende Peer ein in dem Peer-to-Peer-Overlay-Netzwerk in einem Suchpfad nachfolgend gelegener Peer.

Bei einer Ausführungsform des erfindungsgemäßen Verfahrens wählt ein Peer, der eine in einem anderen Peer des Peer-to-Peer-Overlay-Netzwerkes abzuspeichernde Datenressource aufweist, zunächst einen Finger-Peer in dem Peer-to-Peer-Overlay-Netzwerk aus dessen Peer-Identifikation den geringsten Abstand zu dem Schlüsselwort der abzuspeichernden Datenressource aufweist.

Bei einer Ausführungsform des erfindungsgemäßen Verfahrens prüft der Peer, ob das Schlüsselwort der abzuspeichernden Datenressource in den Schlüsselwortbereich des aufgefundenen Finger-Peers fällt.

Bei einer Ausführungsform des erfindungsgemäßen Verfahrens wird geprüft, ob die Anzahl der bei dem aufgefundenen Finger-Peer abgespeicherten Datenressourcen einen Ressourcengrenzwert erreicht hat, wenn das Schlüsselwort einer abzuspeichernden Datenressource in den Schlüsselwortbereich des aufgefundenen Finger-Peers fällt.

Bei einer Ausführungsform des erfindungsgemäßen Verfahrens wird die Datenressource bei dem aufgefundenen Finger-Peer gespeichert, wenn dieser Finger-Peer einen Ressourcengrenzwert noch nicht erreicht hat.

Bei einer Ausführungsform des erfindungsgemäßen Verfahrens wird, wenn der aufgefundene Finger-Peer einen Ressourcengrenzwert erreicht hat, weiterhin geprüft, ob ein zu dem Finger-Peer benachbart gelegener weiterer Peer innerhalb des Peer-to-Peer-Overlay-Netzwerks bereits einen Ressourcengrenzwert erreicht hat.

Bei einer Ausführungsform des erfindungsgemäßen Verfahrens wird die abzuspeichernde Datenressource bei dem benachbart gelegenen Peer abgespeichert, wenn dieser seinen Ressourcengrenzwert noch nicht erreicht hat.

Bei einer Ausführungsform des erfindungsgemäßen Verfahrens wird, wenn das Schlüsselwort der abzuspeichernden Datenressource nicht in den Schlüsselwortbereich des ausgewählten Finger-Peers fällt, seinerseits ein Finger-Peer des ausgewählten Finger-Peers ausgewählt, dessen Peer-Identifikation den geringsten Abstand zu dem Schlüsselwort der abzuspeichernden Datenressource aufweist.

Bei einer Ausführungsform des erfindungsgemäßen Verfahrens wählt ein Peer, der eine in einem anderen Peer des Peer-to-Peer-Overlay-Netzwerks abgespeicherte Datenressource auswählt, zunächst einen Finger-Peer in dem Peer-to-Peer-Overlay-Netzwerk aus dessen Peer-Identifikation den geringsten Abstand zu dem Schlüsselwort der gesuchten Datenressource aufweist.

Bei einer Ausführungsform des erfindungsgemäßen Verfahrens wird geprüft, ob das Schlüsselwort der gesuchten Datenressource in den Schlüsselwortbereich des aufgefundenen Finger-Peers fällt.

Bei einer Ausführungsform des erfindungsgemäßen Verfahrens wird geprüft, ob die Anzahl der bei dem aufgefundenen Finger-Peer gespeicherten Datenressourcen größer oder gleich ist als die Anzahl de angeforderten Datenressourcen.

Bei einer Ausführungsform des erfindungsgemäßen Verfahrens werden, wenn die Anzahl der angeforderten Datenressourcen geringer oder gleich der Anzahl der bei dem aufgefundenen Finger-Peer gespeicherten Datenressourcen ist, die angeforderten Datenressourcen an den suchenden Peer ausgegeben.

Bei einer Ausführungsform des erfindungsgemäßen Verfahrens wird, wenn die Anzahl der angeforderten Datenressourcen größer ist als die Anzahl der bei dem aufgefundenen Finger-Peer gespeicherten Datenressourcen iterativ geprüft, ob die Summe aus der Anzahl der bei dem aufgefundenen Finger-Peer gespeicherten Datenressourcen plus die Anzahl der bei einem dazu benachbart gelegenen Peer gespeicherten Datenressourcen größer ist als die Anzahl der durch den suchenden Peer angeforderten Datenressourcen.

Bei einer Ausführungsform des erfindungsgemäßen Verfahrens wird, wenn festgestellt wird, dass das Schlüsselwort der gesuchten Datenressourcen nicht in den Schlüsselwortbereich des aufgefundenen Finger-Peers fällt, ein Finger-Peer des aufgefundenen Finger-Peers ausgewählt wird, dessen Peer-Identifikation den geringsten Abstand zu dem Schlüsselwort der gesuchten Datenressource aufweist.

Bei einer Ausführungsform des erfindungsgemäßen Verfahrens weist das Peer-to-Peer-Overlay-Netzwerk eine kettenförmige Topologie auf.

Bei einer Ausführungsform des erfindungsgemäßen Verfahrens weist das Peer-to-Peer-Overlay-Netzwerk eine baumförmige Topologie auf.

Bei einer Ausführungsform des erfindungsgemäßen Verfahrens weist das Peer-to-Peer-Overlay-Netzwerk eine ringförmige Topologie auf.

Bei einer Ausführungsform des erfindungsgemäßen Verfahrens wird das Peer-to-Peer-Overlay-Netzwerk durch ein Chord-Netzwerk gebildet.

Bei einer Ausführungsform des erfindungsgemäßen Verfahrens wird das Peer-to-Peer-Overlay-Netzwerk durch ein Gnutella-Overlay-Netzwerk gebildet.

Bei einer Ausführungsform des erfindungsgemäßen Verfahrens wird das Peer-to-Peer-Overlay-Netzwerk durch ein Torrent-Netzwerk gebildet.

Bei einer Ausführungsform des erfindungsgemäßen Verfahrens wird das Peer-to-Peer-Overlay-Netzwerk durch ein CAN-Netzwerk gebildet.

Die Erfindung schafft ferner ein Peer-to-Peer-Netzwerk mit mehreren Peers, die jeweils einen zugehörigen Schlüsselwortbereich aufweisen, wobei eine zu speichernde Datenressource deren Schlüsselwort in dem Schlüsselwortbereich eines Peers liegt, bei diesem Peer nur dann abgespeichert wird, wenn die Anzahl der dort gespeicherten Datenressourcen einen einstellbaren Ressourcengrenzwert noch nicht erreicht hat, wobei der Ressourcengrenzwert eines Peers separat individuell eingestellt ist.

Im Weiteren werden bevorzugte Ausführungsformen des erfindungsgemäßen Verfahrens zur gleichmäßigen Lastverteilung und des erfindungsgemäßen Netzwerkes mit gleichmäßiger Lastverteilung unter Bezugnahme auf die beigefügten Figuren zur Erläuterung erfindungswesentlicher Merkmale beschrieben.

Es zeigen:

Figuren 1a, 1b:     ein Beispiel eines herkömmlichen Peer-to-Peer-Overlay-Netzwerkes mit einer beispielhaften Schlüsselwort-Bereichsverteilung;

Figuren 2a, 2b:     Diagramme eines herkömmlichen Suchvorgangs zum Auffinden eines Peers innerhalb des in Figur 1a dargestellten Peer-to-Peer-Overlay-Netzwerkes;

Figur 3:     ein Ablaufdiagramm zur Darstellung einer möglichen Ausführungsform eines erfindungsgemäßen Verfahrens zur gleichmäßigen Lastverteilung bei einem Peer-to-Peer-Overlay-Netzwerk;

Figur 4:     ein Beispiel für das Abspeichern einer Datenressource mittels des erfindungsgemäßen Verfahrens;

Figur 5:     ein weiteres Ablaufdiagramm zur Darstellung des erfindungsgemäßen Verfahrens zur gleichmäßigen Lastverteilung bei einem Peer-to-Peer-Overlay-Netzwerk;

Figur 6: ein Beispiel für einen Suchvorgang, bei dem eine Datenressource mittels des erfindungsgemäßen Verfahrens in einem Peer-to-Peer-Overlay-Netzwerk gesucht wird.

Dem erfindungsgemäßen Verfahren zur gleichmäßigen Lastverteilung bei einem aus mehreren Peers bestehenden Peer-to-Peer-Overlay-Netzwerk liegt die Idee zugrunde, Datenressourcen mit gleichen Schlüsselwörtern auf mehrere Peers derart zu verteilen, dass erstens eine vorgegebene Topologie des Peer-to-Peer-Overlay-Netzwerkes eingehalten wird, und zweitens die Anzahl der gespeicherten Datenressourcen pro Peer limitiert ist. Hierdurch kann die Last, welche sowohl durch die Verwaltung als auch durch das Auffinden von Datenressourcen entsteht, auf eine Gruppe von Peers verteilt werden.

Bei dem erfindungsgemäßen Verfahren wird ein Abspeichern bzw. Publizieren von Datenressourcen durch Peers sukzessiv aufgeführt. Hat ein Peer ein Ressourcenlimit bzw. einen Ressourcengrenzwert erreicht, verweist der aufgefüllte Peer auf den nächsten Peer innerhalb des Peer-to-Peer-Overlay-Netzwerkes. Ist dieser Peer seinerseits ausgelastet, verweist er auf den nächsten benachbart gelegenen Peer usw. Haben alle Peers des Peer-to-Peer-Overlay-Netzwerkes ihren Ressourcengrenzwert erreicht, kann bei einer Ausführungsform die Speicherkapazität zum Abspeichern der Datenressource pro Peer erhöht werden oder das Abspeichern der Datenressourcen bzw. deren Publikation wird abgelehnt. Die Reihenfolge, in der Peers-to-Peers aufgefüllt werden, hängt von der Topologie des zugrunde liegenden Peer-to-Peer-Overlay-Netzwerkes ab. Die Topologie des Peer-to-Peer-Overlay-Netzwerkes kann kettenförmig, baumförmig oder ringförmig sein.

Bei einer möglichen Ausführungsform des erfindungsgemäßen Verfahrens wird ein ringförmiges Chord-Peer-to-Peer-Overlay-Netzwerk eingesetzt.

Bei alternativen Ausführungsformen können ein Gnutella-Overlay-Netzwerk, ein Torrent-Netzwerk oder ein CAN-Peer-to-Peer-Overlay-Netzwerk verwendet werden.

Bei der Suche nach einer Datenressource kann sich der suchende Peer die Topologie einer Gruppe von speichernden Peers zunutze machen, um auf effiziente Art und Weise einen Peer zu finden, der die Suchanfrage beantworten kann. Sollte eine größere Anzahl von Datenressourcen aufgefunden werden, erhält der suchende Peer von den zu speichernden Peers Informationen, auf welchem Peer innerhalb der speichernden Gruppe von Peers weitere Datenressourcen zu finden sind. Dabei wird unter Ausnutzung der Topologie des Peer-to-Peer-Overlay-Netzwerkes die Abfragereihenfolge festgelegt. Dies ermöglicht eine iterative Suche nach Datenressourcen, die bei zentral verwaltenden Datenbanksystemen nicht möglich ist.

Bei dem erfindungsgemäßen Verfahren zur gleichmäßigen Lastverteilung bei einem Peer-to-Peer-Overlay-Netzwerk wird eine zu speichernde Datenressource, deren Schlüsselwort in dem Schlüsselwortbereich des Peers liegt, bei diesem Peer nur dann abgespeichert, wenn die Anzahl der dort gespeicherten Datenressourcen einen Ressourcengrenzwert noch nicht erreicht hat. Bei einer Ausführungsform des erfindungsgemäßen Verfahrens ist der Ressourcengrenzwert für jeden Peer individuell einstellbar. Bei einer alternativen Ausführungsform weisen alle Peers des Netzwerkes den gleichen Ressourcengrenzwert auf. Bei den verwendeten Schlüsselworten handelt es sich vorzugsweise um Hash-Werte, die mittels einer vorgegebenen Hash-Funktion aus Daten der Datenressource abgeleitet werden.

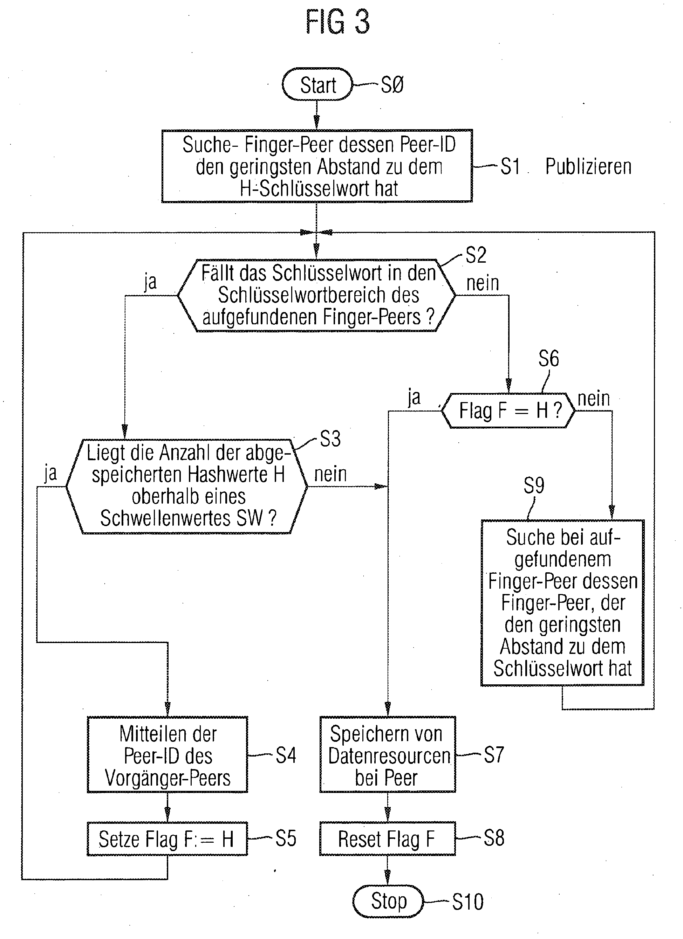

In Figur 3 ist das Publizieren bzw. das Abspeichern einer Datenressource innerhalb eines Peer-to-Peer-Overlay-Netzwerkes, beispielsweise eines ringförmigen Port-Peer-to-Peer-Overlay-Netzwerkes, dargestellt.

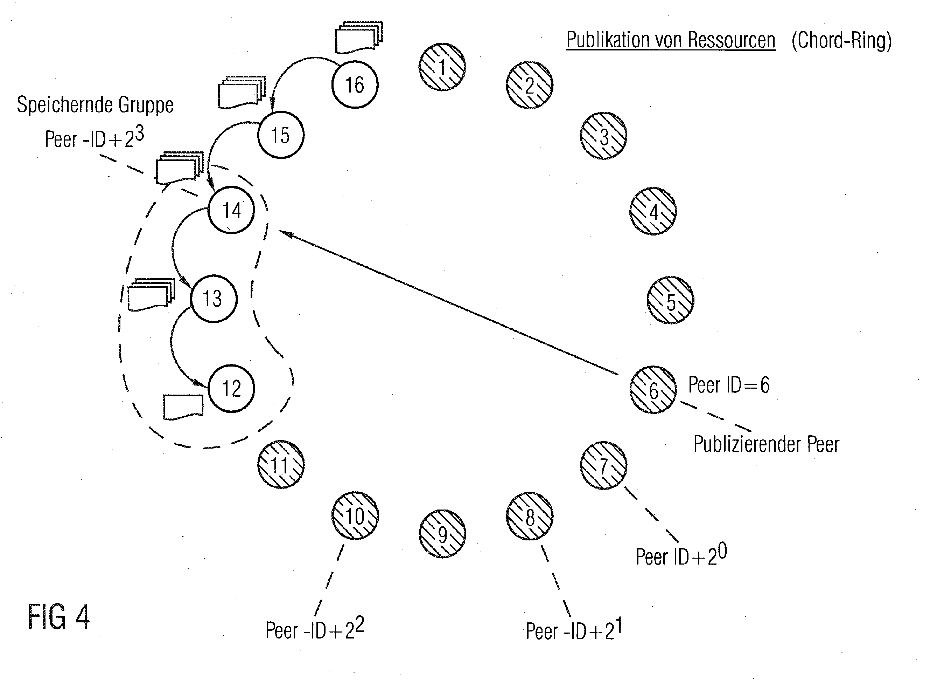

Figur 4 zeigt den Publikationsvorgang einer Datenressource beispielhaft an einem Chord-Ring mit sechzehn Peers P1-P16. Möchte ein Peer P eine Datenressource an einem anderen Peer P des Peer-tö-Peer-Netzwerkes abspeichern, sucht er zunächst im Schritt S1 nach einem Finger-Peer dessen Peer-Identifikation den geringsten Abstand zu dem Schlüsselwort der Datenressource aufweist. Bei dem Schlüsselwort kann es sich beispielsweise um einen Hash-Wert H handeln, der von einem vergebenen Namen für die Datenressource, wie beispielsweise "Landschaft" oder "Müller", abgeleitet ist oder von der Datenressource selbst. Jeder Peer innerhalb des Peer-to-Peer-Overlay-Netzwerkes weist eine eindeutige Peer-Identifikation auf, bei der es sich um eine virtuelle Adresse handelt. Bei der in Figur 4 dargestellten beispielhaften Ringstruktur eines Peer-to-Peer-Overlay-Netzwerkes weist jeder der sechzehn Peers P1-P16 eine eindeutige Peer-ID auf. Möchte beispielsweise der Peer Nr. 6 mit der Peer-ID = 6 eine Datenressource in einem anderen Peer P des Overlay-Netzwerkes abspeichern bzw. ablegen, berechnet er anhand der Daten bzw. eines vergebenen Dateinamens ein Schlüsselwort bzw. einen Hash-Wert H für die abzuspeichernde Datenressource. Bei dem gehashten Wert H kann es sich beispielsweise um eine 128 Zeichen umfassende Zeichenkette handeln.

Zunächst sucht der suchende Peer P6, d. h. der Peer mit der Peer-Nr. 6 einen zugehörigen Finger-Peer dessen Peer-ID den geringsten Abstand zu dem Schlüsselwort, d. h. zu dem berechneten Hash-Wert H aufweist. Für die Peer-ID eines Finger-Peers gilt:

$$\text{Peer}_{\text{Finger-Peer}} = \text{Peer-ID} + 2^K.$$

Bei dem in Figur 4 dargestellten Beispiel werden die Finger-Peers für den suchenden Peer Nr. 6 durch die Peers mit den Peer-IDs 7, 8, 10, 14 gebildet.

Derjenige Peer P, der die Datenressource abspeichern möchte, sucht im Schritt S1 gemäß Figur 3 nun denjenigen Finger-Peer dessen Peer-Identifikation den geringsten Abstand zu dem gebildeten Schlüsselwort der abzuspeichernden Datenressource aufweist. Anschließend wird im Schritt S2 geprüft, ob das Schlüsselwort der abzuspeichernden Datenressource in den Schlüsselwortbereich des aufgefundenen Finger-Peers fällt. Beispielsweise wird der Finger-Peer mit der Peer-ID 14 ausgewählt und anschließend geprüft, ob das Schlüsselwort in dessen Schlüsselwortbereich fällt.

Ist dies der Fall, d. h. fällt das Schlüsselwort der abzuspeichernden Datenressourcen in den Schlüsselwortbereich des aufgefundenen Finger-Peers, wird weiterhin geprüft, ob die Anzahl der bei dem aufgefundenen Finger-Peer abgespeicherten Datenressourcen bereits den dort eingestellten bzw.konfigurierten Ressourcengrenzwert des Peers erreicht hat oder nicht.

Verfügt der aufgefundene Peer noch über Speicherplatz, wird im Schritt S7 die Datenressource bei diesem Peer abgespeichert. Ist umgekehrt die Speicherkapazität des selektierten Finger-Peers ausgeschöpft, teilt dieser dem suchenden Peer P6 mit der Peer-ID-Nr. 6 die Peer-ID seines Vorgänger-Peers innerhalb des Peer-to-Peer-Overlay-Netzwerkes mit. Bei dem in Figur 4 dargestellten ringförmigen Chord-Peer-to-Peer-Overlay-Netzwerk teilt beispielsweise der aufgefundene Finger-Peer P14 dem suchenden Finger-Peer P6 die Peer-ID des Vorgänger-Peers mit der Peer-ID-Nr. P13 mit.

Anschließend wird im Schritt S5 ein Anzeigeflag F gesetzt.

Fällt das gebildete Schlüsselwort bzw. der Schlüssel der zu speichernden Datenressource nicht in den Schlüsselwortbereich des aufgefundenen Finger-Peers, beispielsweise des Finger-Peers Nr. 14, wird im Schritt S6 geprüft, ob das Anzeigeflag F gesetzt ist oder nicht. Ist das Anzeigeflag F gesetzt, wird die Datenressource bei dem angezeigten Vorgänger-Peer Nr. 13 im Schritt S7 abgelegt. Anschließend wird das Anzeigeflag F im Schritt S8 zurückgesetzt und der Vorgang endet im Schritt S10. Wird umgekehrt im Schritt S6 festgestellt, dass das Anzeigeflag F nicht gesetzt ist, wird bei dem aufgefundenen Finger-Peer, beispielsweise bei dem Finger-Peer P14 dessen Finger-Peer gesucht, der seinerseits den geringsten Abstand zu dem Schlüsselwort der abzuspeichernden Datenressource aufweist. Der Vorgang kehrt anschließend zu Schritt S2 zurück. Auf diese Weise werden sukzessive benachbart gelegene Peers innerhalb des Peer-to-Peer-Overlay-Netzwerkes mit Datenressourcen aufgefüllt. Bei dem in Figur 4 dargestellten Beispiel werden die Peers P14, P13, P12 sukzessiv aufgefüllt und bilden eine Speichergruppe für Datenressourcen, die das gleiche Schlüsselwort aufweisen.

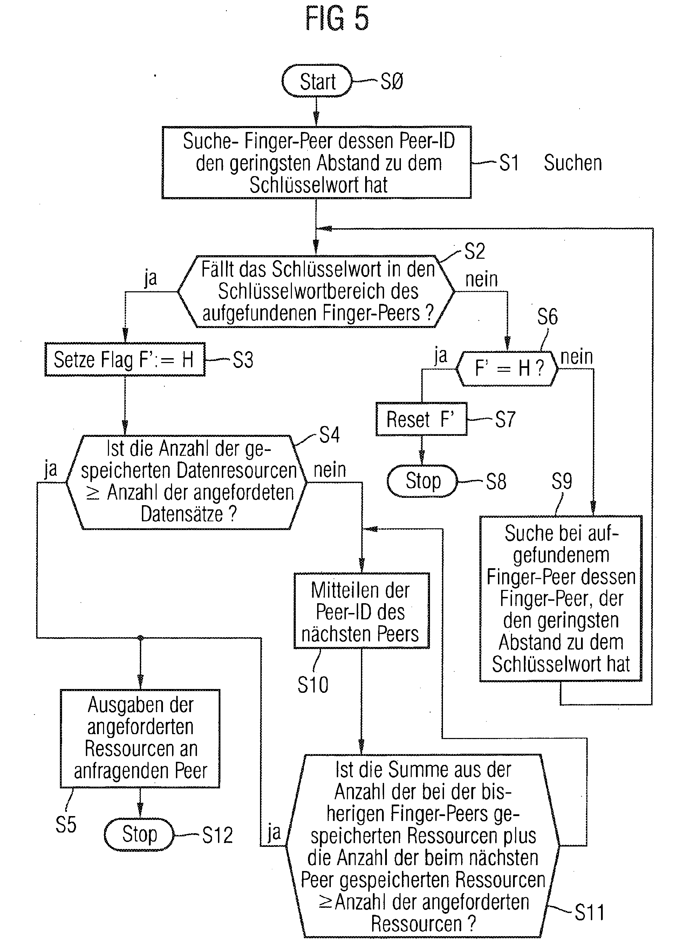

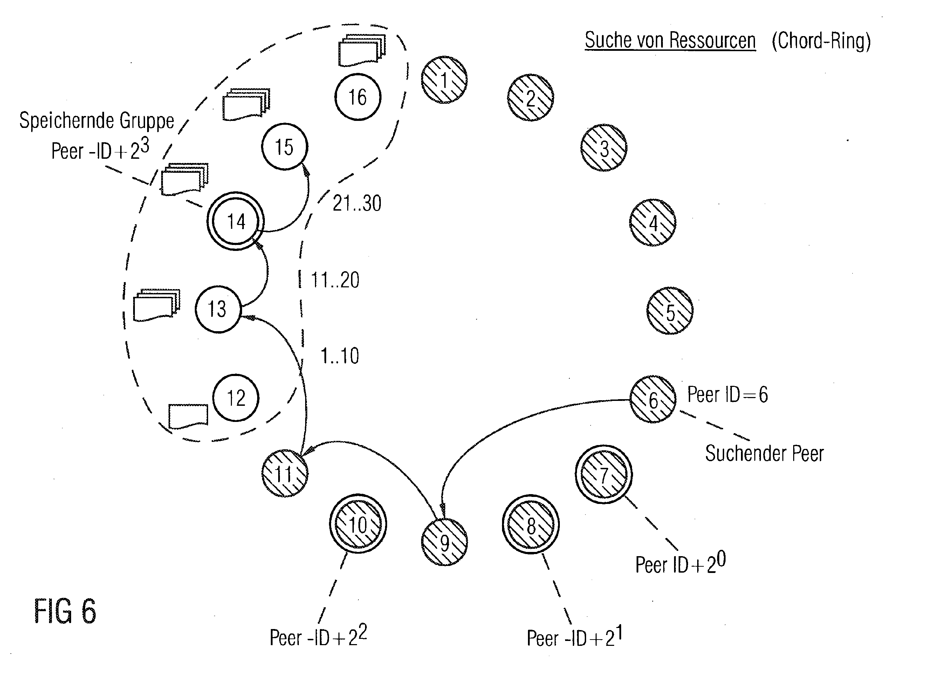

Figur 5 zeigt ein Ablaufdiagramm zur Darstellung eines Suchvorgangs zum Suchen einer Datenressource innerhalb eines Peer-to-Peer-Overlay-Netzwerkes bei einer möglichen Ausführungsform des erfindungsgemäßen Verfahrens. Figur 6 zeigt ein einfaches Beispiel für ein Peer-to-Peer-Overlay-Netzwerk mit Chord-Ringstruktur.

In einem Schritt S1 wird zunächst derjenige Peer gesucht dessen Peer-ID den geringsten Abstand zu dem gebildeten Schlüsselwort aufweist.

Anschließend wird im Schritt S2 geprüft, ob das gebildete Schlüsselwort in den Schlüsselwortbereich des aufgefundenen Peers P fällt. Ist dies der Fall, wird im Schritt S3 ein Anzeigeflag F' gesetzt.

Anschließend wird im Schritt S4 geprüft, ob die Anzahl der bei dem aufgefundenen Peer P gespeicherten Datenressource größer als die Anzahl der durch den suchenden Peer angeforderten Datenressourcen ist oder nicht. Ist die Anzahl der gespeicherten Datenressourcen ausreichend, d. h. größer als die Anzahl der angeforderten Datensätze, werden im Schritt S5 die angeforderten Datenressourcen an den anfragenden Peer abgegeben. Ist umgekehrt die Anzahl der abgespeicherten Datenressourcen nicht ausreichend, wird im Schritt S10 auf den nächstliegenden Peer des Peer-to-Peer-Overlay-Netzwerkes verwiesen. Anschließend wird die Summe aus der Anzahl der gespeicherten Datenressourcen der bisher aufgefundenen Peers und der Anzahl der bei dem nächsten Peer gespeicherten Datenressourcen gebildet und mit der Anzahl der angeforderten Datenressourcen verglichen. Sobald der Summenwert die Anzahl der angeforderten Datenressourcen übersteigt, werden die angeforderten Datenressourcen aus den verschiedenen Peers der Speichergruppe an den anfragenden Peer abgegeben.

Wird im Schritt S2 bei dem Suchvorgang festgestellt, dass das Schlüsselwort nicht in den Schlüsselwortbereich des aufgefundenen Finger-Peers fällt, wird im Schritt S6 geprüft, ob das Anzeigeflag F' gesetzt ist oder nicht. Ist es gesetzt, wird es im Schritt S7 zurückgesetzt. Ist es nicht gesetzt, wird im Schritt S9 zu dem aufgefundenen Finger-Peer seinerseits das Finger-Peer gesucht, dessen Peer-ID den geringsten Abstand zu dem Schlüsselwort der gesuchten Datenressource aufweist und man kehrt dann zu Schritt S2 zurück.

In dem dargestellten Beispiel entspricht die Topologie der speichernden Peer-Gruppe einem Kreisabschnitt des Chord-Rings. Eine Gruppe von speichernden Peers wird gebildet, indem bei einem Überlaufen eines Peers an einen Nachbar-Peer mit dem nächsten kleineren Index verwiesen wird, und zwar solange, bis ein geeigneter Peer aufgefunden wird. Bei einer alternativen Ausführungsform kann der äußere Rand der Gruppe, d. h. die Länge des Ringabschnitts zwischengespeichert werden. Dabei wird die Position des äußeren Peers beispielsweise bei den Peers entlang der verschiedenen Pfade in der Gruppe abgelegt und bei der Suche bzw. Publikation aktualisiert. Da die Pfadlänge logarithmisch mit der Ringgröße skaliert ist und publizierende bzw. suchende Peers jeweils nur die Werte eines Pfades aktualisieren, verhält sich der Aufwand hier ebenfalls logarithmisch. Obwohl es relativ unwahrscheinlich ist, dass der zwischengespeicherte Wert direkt auf den äußeren Peer der Gruppe verweist, stellt das Zwischenspeichern eine sehr gute Näherung dar. Sollte der Gruppenrand bei dieser Ausführungsform nicht direkt getroffen werden, kann er wiederum wie oben beschrieben mit linearem Aufwand ermittelt werden.

Bei dem erfindungsgemäßen Verfahren muss ein suchender Peer P, um eine gespeicherte Datenressource aufzufinden, zunächst die speichernde Gruppe lokalisieren. Dazu wird zunächst der für den Schlüsselwortbereich zuständige Peer ermittelt. Zusätzlich wird für jeden Hop überprüft, ob der jeweilige Peer P bereits Teil der Gruppe ist. Sobald ein Peer der Gruppe erreicht ist, wird die Anfrage ausgewertet und gegebenenfalls Ressourcen an den suchenden Peer zurückgeliefert. Da die Pfade von den suchenden zu den speichernden Peers unterschiedlich sind, wird die Anfragebelastung jeweils auf unterschiedliche Peers innerhalb der Gruppe verteilt. Eine noch bessere Verteilung wird erreicht, wenn der suchende Peer die Position des Ringabschnitts den zwischengespeicherten Werten entnimmt und einen Pfad direkt zu einem zufällig gewählten Peer der Gruppe wählt.

Werden bei dem erfindungsgemäßen Verfahren bei der Suche mehr Datenressourcen angefordert als von einem einzelnen Peer zur Verfügung gestellt werden kann, verweist der Peer auf denjenigen benachbarten Peer mit dem nächstgrößeren bzw. kleineren Index. Durch die sukzessive Weiterleitung der Anfrage innerhalb der Gruppe wird eine iterative Suche über die Menge aller Datenressourcen eines bestimmten Schlüsselwortes ermöglicht.

Bei dem erfindungsgemäßen Verfahren wird eine Balancierung der Such- und Verwaltungslast von Ressourcen in Peer-to-Peer-Systemen erzielt. Die sukzessive Auffüllung der Peers mit Ressourcen führt zur Bildung von Gruppen zur Lastverteilung. Diese Eigenschaft verhindert die Bildung von sogenannten Hotspots unabhängig von der Häufigkeitsverteilung der jeweiligen Ressourcenschlüsselwörter. Die sukzessive Weiterleitung einer Anfrage bei dem erfindungsgemäßen Verfahren innerhalb einer Gruppe ermöglicht eine iterative Sucher über die Menge aller Datenressourcen eines bestimmten Schlüsselwortes. Peer-Applikationen können diese Eigenschaften ausnutzen, um in sehr großen Ressourcenmengen zu suchen. Dementsprechend ist es für Benutzer möglich, große Ergebnislisten zu "browsen".

Ein Anwendungsbeispiel für das erfindungsgemäße Verfahren zur gleichmäßigen Lastverteilung bei einem aus mehreren Peers bestehenden Peer-to-Peer-Overlay-Netzwerk besteht auf dem Gebiet der Verbreitung digitaler Medien. Dabei werden die Daten in einem Chord-basierten Peer-to-Peer-Overlay-Netzwerk abgelegt und sind über Metainformationen, beispielsweise über den Titel, den Schauspieler, das Genre usw. auffindbar. Zusätzlich kann jedem Medium Z. B. einem Film ein eindeutiger Identifikator zugeordnet werden. Überlastungen treten vor allem bei den Genre-Schlüsselwörtern auf, aber auch bei Titeln und Namen bekannter Schauspieler sowie von sehr beliebten Filmen. Die meisten Haushalten verfügen zudem über eine asynchrone Internetverbindung, d. h. über eine relativ hohe Download-Bandbreite bei gleichzeitig niedriger Upload-Bandbreite, sodass die Übertragung von Filmen in Echtzeit mehr als einen Peer als Datensender benötigt. Hierzu werden den Daten auf verschiedene Peers verteilt. Zum Empfang eines Videostromes werden daher mehrere Suchvorgänge benötigt. Bei einem ersten Suchvorgang wird der gesuchte Film über seine Metadaten-Beschreibung aufgefunden. In einem zweiten Suchvorgang werden Sender-Peers über einen eindeutigen Identifikator gesucht. Peers, welche den gesuchten Film einmal komplett empfangen haben, können ihn wiederum an andere Peers senden, sodass die Anzahl publizierter Datenressourcen stetig zunimmt. Je nach Popularität des gesuchten Inhalts bzw. Films gibt es sehr viele Datenressourcen für einen bestimmten Identifikator. Dies würde bei einem normalen Chord-Peer-to-Peer-Netzwerk zu einer Überlastung einzelner Peers führen. Durch die gleichmäßige Lastverteilung der Datenressourcen durch das erfindungsgemäße Verfahren wird die Such- und Verwaltungslast verteilt und somit eine Überlastung individueller Peers innerhalb des Peer-to-Peer-Overlay-Netzwerks verhindert. Das oben genannte Beispiel lässt sich leicht auf andere Anwendungsbereiche übertragen. Ein durch den Namen eines Schauspielers entstehende Hotspot ist beispielsweise auf die natürliche Ungleichverteilung von Vor- und Nachnamen zurückzuführen. Das gleiche Problem tritt bei verteilten Adress- und Telefonbüchern sowie Gewerbeverzeichnissen wie den Gelben Seiten auf. In all diesen Anwendungsbereichen eignet sich das erfindungsgemäße Verfahren zu einer gleichmäßigen Lastverteilung zur Vermeidung von Hotspots bzw. Überbelastungen einzelner Peers.

## Patentansprüche

1. Verfahren zur gleichmäßigen Lastverteilung bei einem aus mehreren Peers bestehenden Peer-to-Peer-Overlay-Netzwerk, die jeweils einen zugehörigen Schlüsselwortbereich aufweisen, **dadurch gekennzeichnet, dass** eine zu speichernde Datenressource, deren Schlüsselwort in dem Schlüsselwortbereich eines Peers liegt, bei diesem Peer nur dann abgespeichert wird, wenn die Anzahl der dort gespeicherten Datenressourcen einen Ressourcengrenzwert noch nicht erreicht hat,
wobei der Ressourcengrenzwert eines Peers jeweils separat individuell eingestellt wird.

2. Verfahren nach Anspruch 1,
wobei ein Peer, dessen Ressourcengrenzwert erreicht ist, auf einen in dem Peer-to-Peer-Overlay-Netzwerk in einem Suchpfad benachbart liegenden Peer verweist.

**3.** Verfahren nach Anspruch 1,
wobei aus dem Schlüsselwort ein Hash-Wert abgeleitet wird.

**4.** Verfahren nach Anspruch 1,
wobei ein benachbart liegende Peer ein in dem Peer-to-Peer-Overlay-Netzwerk nachfolgender Peer ist.

**5.** Verfahren nach Anspruch 1,
wobei ein Peer, der eine in einem anderen Peer des Peer-to-Peer-Overlay-Netzwerks abzuspeichernde Datenressource aufweist, zunächst einen Finger-Peer in dem Peer-to-Peer-Overlay-Netzwerk auswählt, dessen Peer-Identifikation den geringsten Abstand zu dem Schlüsselwort der abzuspeichernden Datenressource aufweist.

**6.** Verfahren nach Anspruch 5,
wobei der Peer prüft, ob das Schlüsselwort der abzuspeichernden Datenressource in den Schlüsselwortbereich des aufgefundenen Finger-Peers fällt.

**7.** Verfahren nach Anspruch 6,
wobei, wenn das Schlüsselwort der abzuspeichernden Datenressource in den Schlüsselwortbereich des aufgefundenen Finger-Peers fällt, geprüft wird, ob die Anzahl der bei dem aufgefundenen Finger-Peer abgespeicherten Datenressource einen Ressourcengrenzwert erreicht hat.

**8.** Verfahren nach Anspruch 7,
wobei die Datenressource bei dem aufgefundenen Finger-Peer gespeichert wird, wenn dieser Finger-Peer seinen Ressourcengrenzwert noch nicht erreicht hat.

**9.** Verfahren nach Anspruch 8,
wobei, wenn der aufgefundene Finger-Peer seinen RessourcenGrenzwert erreicht hat, geprüft wird, ob ein zu dem Finger-Peer in einem Suchpfad benachbart gelegener Peer innerhalb des Peer-to-Peer-Overlay-Netzwerks bereits seinen Ressourcengrenzwert erreicht hat.

**10.** Verfahren nach Anspruch 9,
wobei die abzuspeichernde Datenressource bei dem in einem Suchpfad benachbart gelegenen Peer abgespeichert wird, wenn dessen Ressourcengrenzwert noch nicht erreicht ist.

**11.** Verfahren nach Anspruch 6,
wobei, wenn das Schlüsselwort der abzuspeichernden Datenressource nicht in den Schlüsselwortbereich des ausgewählten Finger-Peers fällt, ein Finger-Peer des ausgewählten Finger-Peers auswählt wird, dessen Peer-Identifikation den geringsten Abstand zu dem Schlüsselwort der abzuspeichernden Datenressource aufweist.

**12.** Verfahren nach Anspruch 1,
wobei ein Peer, der eine in einem anderen Peer des Peer-to-Peer-Overlay-Netzwerks abgespeicherte Datenressource auswählt, zunächst einen Finger-Peer in dem Peer-to-Peer-Overlay-Netzwerk auswählt, dessen Peer-Identifikation den geringsten Abstand zu dem Schlüsselwort der gesuchten Datenressource aufweist.

**13.** Verfahren nach Anspruch 12,
wobei geprüft wird, ob das Schlüsselwort der gesuchten Datenressource in den Schlüsselwortbereich des aufgefundenen Finger-Peers fällt.

**14.** Verfahren nach Anspruch 13,
wobei geprüft wird, ob die Anzahl der bei dem aufgefundenen Finger-Peer gespeicherten Datenressourcen größer oder gleich der Anzahl der angeforderten Datenressourcen ist.

**15.** Verfahren nach Anspruch 14,
wobei, wenn die Anzahl der angeforderten Datenressourcen geringer oder gleich der Anzahl der bei dem aufgefundenen Finger-Peer gespeicherten Datenressourcen ist, die angeforderten Datenressourcen an den suchenden Peer ausgegeben werden.

**16.** Verfahren nach Anspruch 14,
wobei, wenn die Anzahl der angeforderten Datenressourcen größer oder gleich der Anzahl der bei dem aufgefundenen Finger-Peer gespeicherten Datenressourcen ist, geprüft wird, ob die Summe aus der Anzahl der bei dem aufgefundenen Finger-Peer gespeicherten Datenressourcen plus die Anzahl der bei einem dazu benachbart gelegenen Peer gespeicherten Datenressourcen größer ist als die Anzahl der durch den suchenden Peer angeforderten Datenressourcen.

**17.** Verfahren nach Anspruch 13,
wobei, wenn festgestellt wird, dass das Schlüsselwort der gesuchten Datenressource nicht in den Schlüsselwortbereich des aufgefundenen Finger-Peers fällt, ein Finger-Peer des aufgefundenen Finger-Peers ausgewählt wird, dessen Peer-Identifikation den geringsten Abstand zu dem Schlüsselwort der gesuchten Datenressource aufweist.

**18.** Verfahren nach Anspruch 1,
wobei das Peer-to-Peer-Overlay-Netzwerk eine kettenförmige Topologie aufweist.

**19.** Verfahren nach Anspruch 1,
wobei das Peer-to-Peer-Overlay-Netzwerk eine baumförmige Topologie aufweist.

**20.** Verfahren nach Anspruch 1,
wobei das Peer-to-Peer-Overlay-Netzwerk eine ringförmige Topologie aufweist.

**21.** Verfahren nach Anspruch 1,
wobei das Peer-to-Peer-Overlay-Netzwerk durch ein Chord-Netzwerk gebildet wird.

**22.** Verfahren nach Anspruch 1,
wobei das Peer-to-Peer-Overlay-Netzwerk durch ein Gnutella-Overlay-Netzwerk gebildet wird.

**23.** Verfahren nach Anspruch 1,
wobei das Peer-to-Peer-Overlay-Netzwerk durch ein Torrent-Netzwerk gebildet wird.

**24.** Verfahren nach Anspruch 1,
wobei das Peer-to-Peer-Overlay-Netzwerk durch ein CAN-Netzwerk gebildet wird.

**25.** Peer-to-Peer-Netzwerk mit mehreren Peers, die jeweils einen zugehörigen Schlüsselwortbereich aufweisen, **dadurch gekennzeichnet, dass** eine zu speichernde Datenressource deren Schlüsselwort in dem Schlüsselwortbereich eines Peers liegt, bei diesem Peer nur dann abgespeichert wird, wenn die Anzahl der dort gespeicherten Datenressourcen einen einstellbaren Ressourcengrenzwert noch nicht erreicht hat,
wobei der Ressourcengrenzwert eines Peers separat individuell eingestellt ist.

**Claims**

**1.** Method for the even load distribution in a peer-to-peer overlay network comprising a plurality of peers, each having an associated keyword range, **characterised in that** a data resource to be stored, whose keyword is within the keyword range of a peer, is only stored with said peer if the number of data resources stored there has not yet reached a resource threshold limit, wherein the resource threshold limit of a peer is separately and individually set in each case.

**2.** Method according to claim 1, wherein a peer whose resource threshold limit has been reached refers to a peer that is adjacent in a search path in the peer-to-peer-overlay network.

**3.** Method according to claim 1, wherein a hash value is derived from the keyword.

**4.** Method according to claim 1, wherein an adjacent peer is a subsequent peer in the peer-to-peer overlay network.

**5.** Method according to claim 1, wherein a peer, which has a data resource that is to be stored in a different peer of the peer-to-peer-overlay network, firstly selects a finger peer in the peer-to-peer overlay network whose peer identification has the smallest spacing from the keyword of the data resource to be stored.

**6.** Method according to claim 5, wherein the peer checks whether the keyword of the data resource to be stored falls within the keyword range of the located finger peer.

**7.** Method according to claim 6, wherein it is checked whether the number of data resources stored with the located finger peer has reached a resource threshold limit if the keyword of the data resource to be stored falls within the keyword range of the located finger peer.

**8.** Method according to claim 7, wherein the data resource is stored with the located finger peer if this finger peer has not yet reached its resource threshold limit.

**9.** Method according to claim 8, wherein it is checked whether a peer that is adjacent to the finger peer in a search path has already reached its resource threshold limit within the peer-to-peer overlay network if the located finger peer has reached its resource threshold limit.

**10.** Method according to claim 9, wherein the data resource to be stored is stored with the peer that is adjacent in a search path if the resource threshold limit thereof has not yet been reached.

**11.** Method according to claim 6, wherein a finger peer of the selected finger peer is selected whose peer identification has the smallest spacing from the keyword of the data resource to be stored if the keyword of the data resource to be stored does not fall in the keyword range of the selected finger peer.

**12.** Method according to claim 1, wherein a peer, which selects a data resource stored in a different peer of the peer-to-peer overlay network, firstly selects a finger peer in the peer-to-peer overlay network whose peer identification has the smallest spacing from the keyword of the sought data resource.

**13.** Method according to claim 12, wherein it is checked whether the keyword of the sought data resource falls within the keyword range of the located finger peer.

**14.** Method according to claim 13, wherein it is checked whether the number of data resources stored with the located finger peer is greater than or equal to the number of requested data resources.

**15.** Method according to claim 14, wherein the requested data resources are output to the searching peer if the number of requested data resources is less than or equal to the number of data resources stored with the located finger peer.

**16.** Method according to claim 14, wherein it is checked whether the total of the number of data resources stored with the located finger peer plus the number of data resources stored with a peer that is adjacent thereto is greater than the number of data resources requested by the searching peer if the number of requested data resources is greater than or equal to the number of data resources stored with the located finger peer.

**17.** Method according to claim 13, wherein a finger peer of the located finger peer is selected whose peer identification has the smallest spacing from the keyword of the sought data resource if it is found that the keyword of the sought data resource does not fall in the keyword range of the located finger peer.

**18.** Method according to claim 1, wherein the peer-to-peer overlay network has chain-like topology.

**19.** Method according to claim 1, wherein the peer-to-peer overlay network has tree-like topology.

**20.** Method according to claim 1, wherein the peer-to-peer overlay network has ring-like topology.

**21.** Method according to claim 1, wherein the peer-to-peer overlay network is formed by a chord network.

**22.** Method according to claim 1, wherein the peer-to-peer overlay network is formed by a Gnutella overlay network.

**23.** Method according to claim 1, wherein the peer-to-peer overlay network is formed by a Torrent network.

**24.** Method according to claim 1, wherein the peer-to-peer overlay network is formed by a CAN network.

**25.** Peer-to-peer network comprising a plurality of peers, which each have an associated keyword range, **characterised**

**in that** a data resource to be stored, whose keyword is within the keyword range of a peer, is only stored with this peer if the number of data resources stored there has not yet reached an adjustable resource threshold limit, wherein the resource threshold limit of a peer is separately and individually set.

**Revendications**

1. Procédé de répartition de charge uniforme dans un réseau superposé poste à poste constitué de plusieurs postes qui présentent chacun une gamme de mots clés associée,
   **caractérisé en ce que**
   une ressource de données à enregistrer, dont le mot clé se situe dans la gamme de mots clés d'un poste, ne peut être enregistrée dans ce poste que si le nombre de ressources de données qui y sont enregistrées n'a pas encore atteint une valeur limite de ressources,
   la valeur limite de ressources d'un poste étant réglée séparément, de façon individuelle.

2. Procédé selon la revendication 1,
   dans lequel un poste, dont la valeur limite de ressources est atteinte, renvoie à un poste situé au voisinage dans un chemin de recherche à l'intérieur du réseau superposé poste à poste.

3. Procédé selon la revendication 1,
   dans lequel une valeur de hachage est dérivée du mot clé.

4. Procédé selon la revendication 1,
   dans lequel un poste situé au voisinage est un poste subséquent dans le réseau superposé poste à poste.

5. Procédé selon la revendication 1,
   dans lequel un poste, qui comporte une ressource de données à enregistrer dans un autre poste du réseau superposé poste à poste, sélectionne d'abord un poste de repérage dans le réseau superposé poste à poste, dont l'identification de poste se rapproche le plus du mot clé de la ressource de données à enregistrer.

6. Procédé selon la revendication 5,
   dans lequel le poste vérifie si le mot clé de la ressource de données à enregistrer se situe dans la gamme de mots clés du poste de repérage trouvé.

7. Procédé selon la revendication 6,
   dans lequel, si le mot clé de la ressource de données à enregistrer se situe dans la gamme de mots clés du poste de repérage trouvé, il est vérifié si le nombre de ressources de données enregistrées dans le poste de repérage trouvé a atteint une valeur limite de ressources.

8. Procédé selon la revendication 7,
   dans lequel la ressource de données est enregistrée dans le poste de repérage trouvé si ce poste de repérage n'a pas encore atteint sa valeur limite de ressources.

9. Procédé selon la revendication 8,
   dans lequel, si le poste de repérage trouvé a atteint sa valeur limite de ressources, il est vérifié si un poste situé au voisinage du poste de repérage dans un chemin de recherche à l'intérieur du réseau superposé poste à poste a déjà atteint sa valeur limite de ressources.

10. Procédé selon la revendication 9,
    dans lequel la ressource de données à enregistrer est enregistrée dans le poste situé au voisinage dans un chemin de recherche si la valeur limite de ressources de celui-ci n'est pas encore atteinte.

11. Procédé selon la revendication 6,
    dans lequel, si le mot clé de la ressource de données à enregistrer ne se situe pas dans la gamme de mots clés du poste de repérage sélectionné, un poste de repérage du poste de repérage sélectionné est sélectionné, dont l'identification de poste se rapproche le plus du mot clé de la ressource de données à enregistrer.

12. Procédé selon la revendication 1,

dans lequel un poste, qui sélectionne une ressource de données enregistrées dans un autre poste du réseau superposé poste à poste, sélectionne d'abord un poste de repérage dans le réseau superposé poste à poste, dont l'identification de poste se rapproche le plus du mot clé de la ressource de données recherchée.

13. Procédé selon la revendication 12,
dans lequel il est vérifié si le mot clé de la ressource de données recherchée est situé dans la gamme de mots clés du poste de repérage trouvé.

14. Procédé selon la revendication 13,
dans lequel il est vérifié si le nombre de ressources de données enregistrées dans le poste de repérage trouvé est supérieur ou égal au nombre de ressources de données demandées.

15. Procédé selon la revendication 14,
dans lequel, si le nombre de ressources de données demandées est inférieur ou égal au nombre de ressources de données enregistrées dans le poste de repérage trouvé, les ressources de données demandées sont fournies au poste qui cherche.

16. Procédé selon la revendication 14,
dans lequel, si le nombre de ressources de données demandées est supérieur ou égal au nombre de ressources de données enregistrées dans le poste de repérage trouvé, il est vérifié si la somme du nombre de ressources de données enregistrées dans le poste de repérage trouvé plus le nombre de ressources de données enregistrées dans un poste situé au voisinage de celui-ci est supérieure au nombre de ressources de données demandées par le poste qui cherche.

17. Procédé selon la revendication 13,
dans lequel, s'il est établi que le mot clé de la ressource de données recherchée ne se situe pas dans la gamme de mots clés du poste de repérage trouvé, un poste de repérage du poste de repérage trouvé est sélectionné, dont l'identification de poste se rapproche le plus du mot clé de la ressource de données recherchée.

18. Procédé selon la revendication 1,
dans lequel le réseau superposé poste à poste présente une topologie en forme de chaîne.

19. Procédé selon la revendication 1,
dans lequel le réseau superposé poste à poste présente une topologie arborescente.

20. Procédé selon la revendication 1,
dans lequel le réseau superposé poste à poste présente une topologie en forme d'anneau.

21. Procédé selon la revendication 1,
dans lequel le réseau superposé poste à poste est formé par un réseau Chord.

22. Procédé selon la revendication 1,
dans lequel le réseau superposé poste à poste est formé par un réseau superposé Gnutella.

23. Procédé selon la revendication 1,
dans lequel le réseau superposé poste à poste est formé par un réseau Torrent.

24. Procédé selon la revendication 1,
dans lequel le réseau superposé poste à poste est formé par un réseau CAN.

25. Réseau poste à poste comportant plusieurs postes qui présentent chacun une gamme de mots clés associée,
**caractérisé en ce que**
une ressource de données à enregistrer, dont le mot clé se situe dans la gamme de mots clés d'un poste, ne peut être enregistrée dans ce poste que si le nombre de ressources de données qui y sont enregistrées n'a pas encore atteint une valeur limite de ressources réglable,
la valeur limite de ressources d'un poste étant réglée séparément, de façon individuelle.

FIG 1A

FIG 1B

FIG 2A

FIG 2B

# FIG 3

Start —SØ

Suche- Finger-Peer dessen Peer-ID den geringsten Abstand zu dem H-Schlüsselwort hat —S1   Publizieren

S2

Fällt das Schlüsselwort in den Schlüsselwortbereich des aufgefundenen Finger-Peers ?

ja                    nein

S6

ja   Flag F = H ?   nein

S3

Liegt die Anzahl der abge-speicherten Hashwerte H oberhalb eines Schwellenwertes SW ?

ja                    nein

S9

Suche bei auf-gefundenem Finger-Peer dessen Finger-Peer, der den geringsten Abstand zu dem Schlüsselwort hat

Mitteilen der Peer-ID des Vorgänger-Peers —S4

Speichern von Datenresourcen bei Peer —S7

Setze Flag F := H —S5

Reset Flag F —S8

Stop —S10

Publikation von Ressourcen (Chord-Ring)

Speichernde Gruppe
Peer -ID $+2^3$

16

15

14

13

12

Peer ID=6

Publizierender Peer

11

10

9

8

7

Peer ID $+2^0$

1

2

3

4

5

6

FIG 4

Peer -ID $+2^2$

Peer -ID $+2^1$

EP 2 095 611 B1

# FIG 5

```
                    ┌─────────┐
                    │  Start  │──S∅
                    └────┬────┘
                         │
          ┌──────────────▼──────────────┐
          │ Suche- Finger-Peer dessen   │
          │ Peer-ID den geringsten      │──S1    Suchen
          │ Abstand zu dem              │
          │ Schlüsselwort hat           │
          └──────────────┬──────────────┘
                         │
                        ┌─────────────────────┐ S2
              ja       ╱ Fällt das Schlüssel-  ╲      nein
           ┌─────────<   wort in den Schlüssel- >──────────┐
           │          ╲ wortbereich des        ╱           │
           │           ╲ aufgefundenen Finger- ╱        S6  │
           │            ╲   Peers ?          ╱             │
           ▼                                     ja  ╱F'=H?╲ nein
   ┌───────────────┐                         ┌───<         >───┐
   │ Setze Flag    │──S3                      │    ╲       ╱    │
   │ F':= H        │                          ▼                │
   └───────┬───────┘                   ┌──────────┐            │
           │                           │ Reset F' │──S7        │
           ▼                           └────┬─────┘            │
    ╱──────────────╲ S4                     ▼                  │
   ╱ Ist die Anzahl ╲               ┌──────────┐   S9          │
  ╱  der gespeicher- ╲ nein         │   Stop   │──S8           │
 < ten Datenressourcen >───┐        └──────────┘               ▼
  ╲ ≥ Anzahl der ange- ╱   │                        ┌──────────────────┐
ja ╲ forderten       ╱     │                        │ Suche bei auf-   │
   ╲ Datensätze ?  ╱       │                        │ gefundenem       │
    ╲────────────╱         │                        │ Finger-Peer      │
      │                    │                        │ dessen Finger-   │
      │                    ▼                        │ Peer, der den    │
      │          ┌──────────────┐                   │ geringsten       │
      │          │ Mitteilen der│                   │ Abstand zu dem   │
      │          │ Peer-ID des  │                   │ Schlüsselwort hat│
      │          │ nächsten Peers│                  └────────┬─────────┘
      │          └──────┬───────┘                            │
      │                 │ S10                                │
      ▼                 │                                    │
 ┌──────────┐           │                                    │
 │ Ausgaben │           │                                    │
 │ der ange-│           │                                    │
 │ forderten│           │                                    │
 │ Ressourcen│          │                                    │
 │ an anfra- │          ▼                                    │
 │ genden Peer│   ╱──────────────────╲                       │
 └────┬─────┘    ╱ Ist die Summe aus  ╲                      │
   S5 │         ╱  der Anzahl der bei   ╲                     │
      │        ╱ der bisherigen Finger-  ╲                    │
      ▼    ja ╱ Peers gespeicherten       ╲◄──────────────────┘
  ┌────────┐ ◄─< Ressourcen plus die Anzahl>
  │  Stop  │──S12 ╲ der beim nächsten Peer  ╱
  └────────┘       ╲ gespeicherten Ressour-╱
                    ╲ cen ≥Anzahl der ange-╱
                     ╲ forderten         ╱──S11
                      ╲ Ressourcen ?   ╱
```

Suche von Ressourcen (Chord-Ring)

Speichernde Gruppe
Peer -ID$+2^3$

21..30

11..20

1..10

Peer ID$=6$

Suchender Peer

Peer ID$+2^0$

Peer -ID$+2^2$

Peer -ID$+2^1$

FIG 6

EP 2 095 611 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004064556 A